# EUROPEAN PATENT APPLICATION

(11) **EP 1 014 247 A2**
(43) Date of publication of application: **28.06.2000**
(21) Application number: 99105021.2
(22) Date of filing: 19.03.1999
(51) Int. Cl.: G05D 16/20, F16K 31/06

(54) **Hydraulic control apparatus and control method for automobile**

(30) Priority: 18.12.1998 JP 36138798
(71) Applicant: Hitachi, Ltd., Chiyoda-ku, Tokyo 101-8010 (JP)
(72) Inventor: Marumoto, Katsuji, Hitachi-shi, Ibaraki-ken (JP); Minowa, Toshimichi, Mito-shi, Ibaraki-ken (JP); Ochi, Tatsuya, Hitachi-shi, Ibaraki-ken (JP); Kashiwaya, Mineo, Hitachinaka-shi, Ibaraki-ken (JP); Kuroiwa, Hiroshi, Hitachi-shi, Ibaraki-ken (JP)
(74) Representative: Beetz & Partner Patentanwälte

(57) **Abstract**

A linear solenoid (9) is actuated with a PWM signal from a hydraulic control circuit (10) to control a coupling state of a clutch in an automatic transmission (1). The linear solenoid (9) is controlled with a hydraulic pressure instruction and a detected current value, and the linear solenoid (9) is further controlled with a detected solenoid current.

## Description

### BACKGROUND OF THE INVENTION

The present invention relates to a hydraulic control apparatus for an automobile, and more particularly to a hydraulic control apparatus and control method for an automobile suitable for controlling a hydraulic pressure by a linear solenoid.
A conventional hydraulic control apparatus, known in the art, detects a current flowing into a linear solenoid itself, corrects the current using a memory map associated with a microcomputer to perform a feedback control, as described in JP-A-10-225179. Another known hydraulic control apparatus detects a linear solenoid current with a shunt resistor, fetches the linear solenoid current through an A/D converter into a microcomputer, detects a maximum value and a minimum value of the current with software, and calculates an average current through arithmetic operations to perform a feedback control.

### SUMMARY OF THE INVENTION

However, a conventional method of correcting a detected current value using a map with software executed by a microcomputer, and a method of calculating an average value of detected current values with software executed by a microcomputer have problems that an increased capacity of memory is required, and a longer processing time is taken for calculations.

A method of directly detecting a current through a linear solenoid with a shunt resistor, in turn, can only detect a pulsed solenoid current due to a PWM control using a semiconductor power switch, so that a pulsed value is detected and fed back, thereby causing a problem that the solenoid cannot be stably controlled.

While it is contemplated that a filter having a time constant large enough to remove a pulsed component of a detected current for stabilizing the control is used to smooth the pulsed current, this technique causes a delay in detection of the current, thereby giving rise to difficulties in achieving the stability and faster response for the control of the linear solenoid current.

It is an object of the present invention to provide a hydraulic control apparatus and control method for an automobile which are capable of highly accurately feedback controlling a linear solenoid current in response to a current instruction value at a high speed.
(1) To achieve the above object, the present invention provides a hydraulic control apparatus for an automobile adapted to control a hydraulic pressure force by a linear solenoid, wherein a control instruction to a driving current supply element connected to a winding of the linear solenoid is controlled on the basis of the value of a current actually flowing into the winding, irrespective of variations in the resistance of the winding due to a temperature.
(2) To achieve the above object, the present invention provides a hydraulic control apparatus for an automobile adapted to control a hydraulic pressure force by a linear solenoid, characterized in that a current instruction is generated on the basis of a hydraulic pressure instruction and supplied to current control means, the value of the current instruction is converted to a PWM duty instruction value, the PWM duty instruction is adjusted with a value derived at an output of the current control means to produce a PWM instruction value, and
   the value of a current flowing through a semiconductor device for supplying the winding of the linear solenoid with a current is adjusted with the duty instruction value based on a PWM instruction, wherein a control instruction value for the semiconductor device is adjusted such that the current value increases as the winding of the linear solenoid has a higher resistance in proportion to a varying temperature.
(3) To achieve the above object, the present invention provides a hydraulic control method for an automobile adapted to control a hydraulic pressure force by a linear solenoid, characterized by changing the value of a current flowing into a winding of the solenoid in accordance with a hydraulic pressure instruction signal and a current instruction signal, and adjusting the current value in accordance with the temperature of the solenoid and/or a supply voltage.
(4) In (3) described above, preferably the current value is adjusted in accordance with the temperature of a hydraulic mechanism which accommodates the linear solenoid.
(5) To achieve the above object, the present invention provides a hydraulic control apparatus for an automobile which comprises a spool valve for controlling a hydraulic pressure force, a linear solenoid for driving the spool valve, a solenoid driving circuit for PWM controlling a current flowing into the linear solenoid to control the spool valve, a PWM driving circuit for supplying the solenoid driving circuit with a pulse width modulated control signal, control means for supplying the PWM driving circuit with a control signal to control the linear solenoid, and current detection means for detecting a current through a power device forming part of the solenoid driving circuit, the current intermittently changing in response to the pulse width modulated control signal, wherein the control means varies the control signal supplied to the PWM driving circuit based on a current detected by the current detection means to control the linear solenoid.
(6) In (5) described above, preferably, the current detection means includes a resistor connected in series with the solenoid driving circuit for detecting a current, and A/D converting means for converting a voltage across the resistor for detecting a current to a digital signal based on the control signal.
(7) In (6) described above, preferably, the current detection means further includes a sample hold circuit for sampling and holding the voltage across the resistor for detecting a current based on the control signal, and the A/D converting means converts the voltage sampled and held by the sample hold circuit to a digital signal based on the control signal.
(8) In (7) described above, preferably, the sample hold circuit samples and holds in synchronism with a falling edge of a pulse in the pulse width modulated control signal.
(9) In (7) described above, preferably, the A/D converting means starts an A/D conversion in synchronism with a falling edge of a pulse in the pulse width modulated control signal.
(10) In (6) described above, preferably, the A/D converting means starts an A/D conversion in synchronism with the timing at one half of an ON period of a pulse of the pulse width modulated control signal.
(11) In (6) described above, preferably, the A/D converting means starts an A/D conversion in synchronism with the lapse of a predetermined time after a rising edge of a pulse in the pulse width modulated control signal.
(12) In (6) described above, preferably, the A/D converting means starts an A/D conversion in synchronism with the timing of a predetermined angle with respect to a period of an ON pulse of the pulse width modulated control signal.
(13) Also, to achieve the above object, the present invention provides a hydraulic control apparatus for an automobile which comprises a spool valve, a linear solenoid for driving the spool valve, a solenoid driving circuit for chopper controlling a current flowing into the solenoid to control a solenoid current, a hydraulic control circuit for supplying the solenoid driving circuit with a pulse width modulated control signal, control means for supplying the hydraulic control circuit with a control signal to control the linear solenoid, and current detection means for detecting a current flowing through a power device forming part of the solenoid driving circuit, wherein the control means controls the linear solenoid based on the hydraulic pressure instruction inputted thereto, and varies the control signal supplied to the hydraulic control circuit based on a current detected by the current detection means to control the linear solenoid.
(14) In (13) described above, preferably, the current detection means includes a resistor connected in series with the solenoid driving circuit for detecting a current, and A/D converting means for converting a voltage across the resistor for detecting a current to a digital signal based on the control signal.
(15) In (14) described above, preferably, the current detection means further includes a sample hold circuit for sampling and holding the voltage across the resistor for detecting a current based on the control signal, and the A/D converting means converts the voltage sampled and held by the sample hold circuit to a digital signal based on the control signal.
(16) In (15) described above, preferably, the sample hold circuit samples and holds in synchronism with a falling edge of a pulse in the pulse width modulated control signal.
(17) In (16) described above, preferably, the A/D converting means starts an A/D conversion in synchronism with a falling edge of a pulse in the pulse width modulated control signal.
(18) In (15) described above, preferably, the A/D converting means starts an A/D conversion in synchronism with the timing at one half of an ON period of a pulse of the pulse width modulated control signal.
(19) In (15) described above, preferably, the A/D converting means starts an A/D conversion in synchronism with the lapse of a predetermined time after a rising edge of a pulse in the pulse width modulated control signal.
(20) In (15) described above, preferably, the A/D converting means starts an A/D conversion in synchronism with the timing of a predetermined angle with respect to a period of an ON pulse of the pulse width modulated control signal.

### BRIEF DESCRIPTION OF THE DRAWINGS

Fig. 1 is a system schematic diagram illustrating the general structure of an automobile transmission applied with a hydraulic control apparatus for an automobile according to an embodiment of the present invention.
Fig. 2 is a schematic diagram illustrating the configuration of a hydraulic control circuit for a linear solenoid for use in the automobile transmission applied with the hydraulic control apparatus for an automobile according to the embodiment of the present invention.
Fig. 3 is a block diagram illustrating the configuration of a control circuit for a linear solenoid for use in the automobile transmission applied with the hydraulic control apparatus for an automobile according to the embodiment of the present invention.
Fig. 4 is a circuit diagram illustrating the configuration of a current detection circuit in the automobile transmission applied with the hydraulic control apparatus for an automobile according to the embodiment of the present invention.
Fig. 5 is waveform charts for describing a variety of currents and voltages in the current detection circuit in the automobile transmission applied with the hydraulic control apparatus for an automobile according to the embodiment of the present invention.
Fig. 6 is a timing chart associated with software processing for detecting a current in a microcomputer serving as a control circuit in the automobile transmission applied with the hydraulic control apparatus for an automobile according to the embodiment of the present invention.
Fig. 7 is a flow chart illustrating the contents of the software processing illustrated in Fig. 6.
Fig. 8 is a graph for describing the solenoid current detection characteristic in a control circuit for a linear solenoid for use in the automobile transmission applied with the hydraulic control apparatus for an automobile according to the embodiment of the present invention.
Fig. 9 is waveform charts for showing a relationship between a current flowing into a solenoid and microcomputer data fetched into a microcomputer according to a prior art scheme.
Fig. 10 is a graph for describing the characteristic for controlling a torque of an output shaft of the automatic transmission applied with the hydraulic control apparatus for an automobile according to the embodiment of the present invention.
Fig. 11 is a graph for describing a solenoid driving current in the automatic transmission applied with the hydraulic control apparatus for an automobile according to the embodiment of the present invention.
Fig. 12 is a block diagram illustrating the configuration of a current detection circuit for use in an automatic transmission applied with a hydraulic control apparatus for an automobile according to a second embodiment of the present invention.
Fig. 13 is waveform charts for describing a variety of currents and voltages and the current detection principles in the current detection circuit in the automatic transmission applied with the hydraulic control apparatus for an automobile according to the second embodiment of the present invention.
Fig. 14 is waveform charts for describing a variety of currents and voltages and the current detection principles in a current detection circuit in an automatic transmission applied with a hydraulic control apparatus for a automobile according to a third embodiment of the present invention.
Fig. 15 is waveform charts for describing a variety of currents and voltages and the current detection principles in a current detection circuit in an automatic transmission applied with a hydraulic control apparatus for a automobile according to a fourth embodiment of the present invention.
Fig. 16 is a schematic diagram illustrating the structure of a belt type continuously variable transmission applied with a hydraulic control apparatus for a automobile according to an embodiment of the present invention.

### DESCRIPTION OF THE PREFERRED EMBODIMENTS

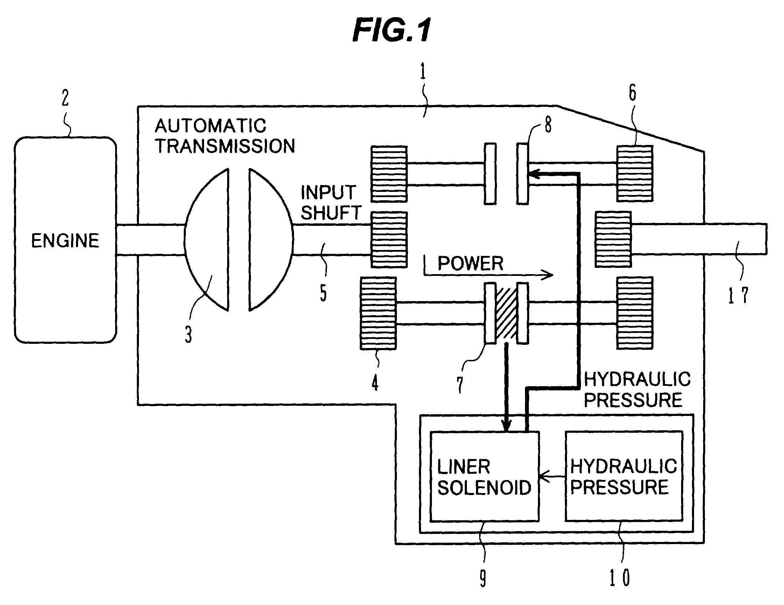

In the following, description will be made on the configuration of an automatic transmission which is applied with a hydraulic control apparatus for an automobile according to an embodiment of the present invention with reference to Figs. 1 to 12.

First, the general configuration of an automobile transmission, which is applied with a hydraulic control apparatus for an automobile according to this embodiment will be described with reference to Fig. 1.

An automatic transmission 1 is composed of a torque converter 3; transmission gears 4, 6; clutches 7, 8; a linear solenoid 9; and a hydraulic control circuit 10.

The torque converter 3 transmits the power from an engine 2 to the output side. An output of the torque converter 3 is coupled to an input shaft 5 of the transmission gear 4. The clutches 7, 8 are arranged between the input side transmission gear 4 and the output side transmission gear 6 for switching the gears. The clutches 7, 8 are each driven by a hydraulic pressure. Hydraulic forces applied to the clutches 7, 8 are controlled by the linear solenoid 9. A displacement amount of the linear solenoid 9 is controlled by a hydraulic control circuit 10.

A driving force from the engine 2 is transmitted to the output side through the torque converter 3, input shaft 5, input side transmission gear 4, clutch 7 or clutch 8, output side transmission gear 6, and transmission output shaft 17. A power generated from the engine 2 is inputted to the automatic transmission 1 through the torque converter 3, and the power is further transmitted from the input shaft 5 to the output shaft 17 through one of the clutches 7 which is now coupled to the output shaft 17. For changing the gear ratio, a hydraulic pressure applied to the released clutch 8 is increased to bring the clutch 8 into a coupled state, while a hydraulic pressure applied to the coupled clutch 7 is reduced to bring the clutch 7 into a released state, thereby switching the power transmission path. The linear solenoid 9 is used to control the hydraulic pressures for driving the clutches 7, 8. The linear solenoid 9 linearly displaces in response to a hydraulic pressure instruction value outputted from the hydraulic control circuit 10, and the hydraulic pressures applied to the clutches 7, 8 are directly and electronically controlled in accordance with the amount of displacement made by the linear solenoid 9.

As described above, the hydraulic transmission control system can eliminate mechanical component parts to reduce the size and weight of the automatic transmission, as well as to improve the transmission performance with a highly accurate hydraulic control using the linear solenoid.

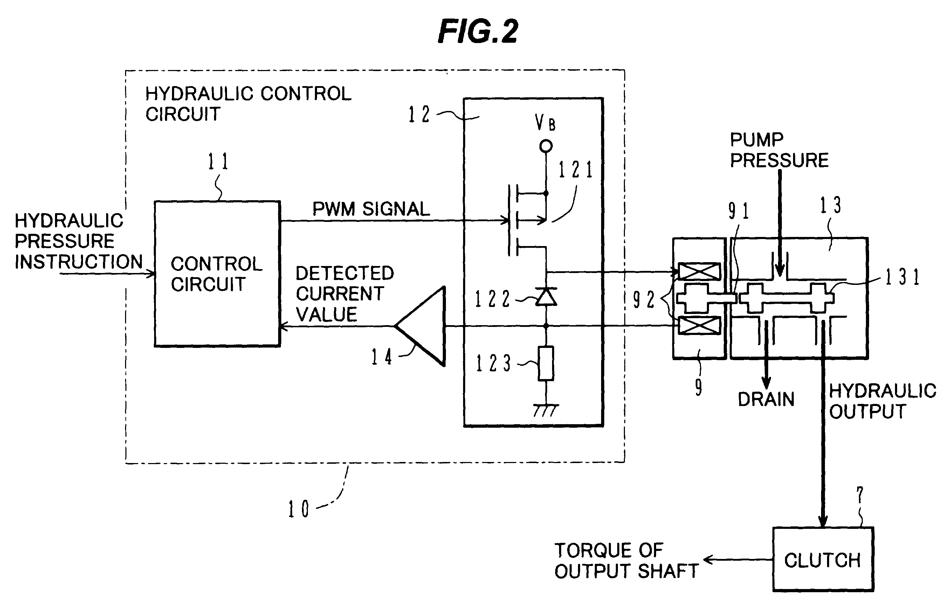

Referring to Fig. 2, description will be next made on the configuration of the hydraulic control circuit 10 for the linear solenoid 9 for use in an automobile transmission, which is applied with the hydraulic control apparatus for an automobile according to this embodiment.

Reference numerals identical to those in Fig. 1 indicate the same parts.

The hydraulic control circuit 10 illustrated in Fig. 1 is composed of a control circuit 11; a solenoid driving circuit 12; and a current detection circuit 14.

The control circuit 11 forces the solenoid driving circuit 12 to output a pulse modulated PWM (Pulse Width Modulation) signal in response to a hydraulic pressure instruction provided from an engine control unit or the like.

The solenoid driving circuit 12 comprises a power device 121; a fly wheel diode 122; and a shunt resistor 123 for detecting a current. The linear solenoid 9 in turn comprises a plunger 91 and a solenoid coil 92.

The PWM signal outputted by the control circuit 11 is inputted to the power device 121 of the solenoid driving circuit 12, causing the power device 121 to operate ON and OFF in synchronism with the PWM signal. When the power device 121 turns ON, a current flows into the shunt resistor 123 for detecting a current through the power device 121 and the solenoid coil 92 of the linear solenoid 9. When the power device 121 turns OFF, the current flowing into the solenoid coil 92 becomes a circulating current which circulates between the solenoid coil 92 and the fly wheel diode 122, and is gradually attenuated. Thus, a pulsed current flows through the solenoid coil 92. The plunger 91 of the linear solenoid 9 is displaced in accordance with an average current of the pulsed current. The displacement of the plunger 91 is transmitted to a spool valve 131 of a hydraulic mechanism 13.

In the hydraulic mechanism 13, a current flowing into the solenoid coil 92 is varied with a pump pressure applied thereto by a hydraulic pump, causing the plunger 91 to displace to move the spool valve 131. In this way, an opening angle of the spool valve is changed to provide a different hydraulic pressure output with which the clutch 7 is driven to control a torque of the output shaft.

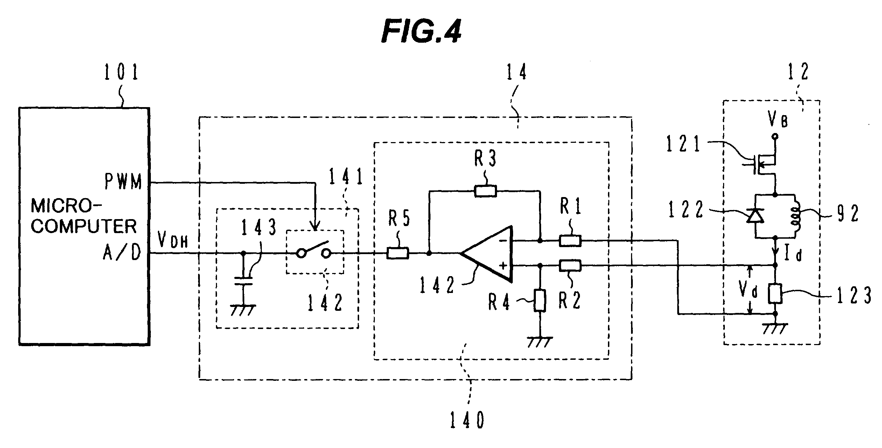

A current flows through the shunt resistor 123 for detecting a current only when the power device 121 is ON, i.e., only when the PWM signal is at ON level in its duty cycle. Thus, the waveform of a current flowing through the power device 121 is transformed into a waveform close to that of a current flowing into the solenoid 92 by the current detection circuit 14. Then, the transformed current is fed back to the control circuit 11 as a detected current value to feedback control the amount of displacement of the solenoid 9. The configuration of the current detection circuit 14 for detecting a solenoid current using the shunt resistor 123 will be described later with reference to Fig. 4.

As described above, a current flowing into the solenoid coil 92 of the linear solenoid 9 is continuously controlled to change an opening angle of the spool valve 131 for controlling a hydraulic pressure, thereby making it possible to control the automatic transmission for changing the gear ratio.

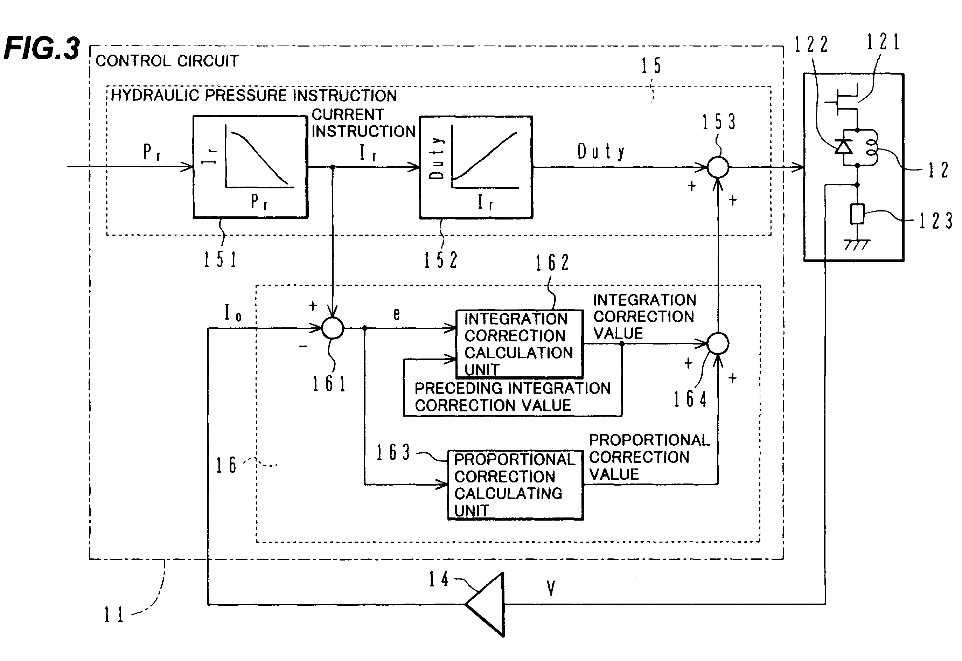

Referring next to Fig. 3, description will be made on the configuration of the control circuit 11 for use in the automobile transmission which is applied with the hydraulic control system for an automobile according to this embodiment.

Reference numerals identical to those in Figs. 1 and 2 indicate the same parts.

The control circuit illustrated in Fig. 2 is composed of a PWM output circuit 15 and a current feedback circuit 16.

The PWM output circuit 15 is composed of a hydraulic pressure instruction value - current instruction value map 151; a current - duty ratio map 152; and an adder 153. The hydraulic pressure instruction value - current instruction value map 151 has previously stored the relationship between a hydraulic pressure instruction value (Pr) and a current instruction value (Ir), from the previously examined characteristics of the solenoid, in the form of table. The current - duty ratio map 152 in turn has previously stored the relationship of a PWM duty ratio (Duty) with respect to the current instruction value (Ir) in the form of table.

The current feedback circuit 16 is composed of an integration correction calculating unit 162; a proportional correction calculating unit 163; an adder 164 for adding an integration correction value and a proportional correction value; and an adder/subtractor 161 for adding the current instruction Ir and a solenoid current Io detected by the current detection circuit 14 or subtracting the latter from the former.

Referring further to Fig. 3, description will be next made on a feedback control for a current.

In a normal PI control having one degree of freedom, responsibility and stability are in a trade-off relationship, so that it is difficult to simultaneously improve both. For improving both the responsibility during a transient state and the stability during a steady-state operation, this embodiment employs a PI control having two degrees of freedoms.

When a hydraulic pressure instruction is given, the hydraulic pressure instruction value - current instruction value map 151 in the PWM output circuit 15 outputs a current instruction value (Ir) for the inputted hydraulic pressure instruction value (Pr) from previously examined characteristics of the solenoid. The current - duty ratio map 152 outputs a PWM duty ratio (Duty) for the current instruction value (Ir) outputted from the hydraulic pressure instruction value - current instruction value map 151. The PWM duty ratio (Duty) outputted from the current - duty ratio map 152 is supplied to the solenoid driving circuit 12 through the adder 153 to feedforward control the valve opening of the spool valve 131 through the linear solenoid 9, thereby improving the responsibility during a transient operation.

The adder/subtractor 161 in the current feedback circuit 16 having two degrees of freedom for control calculates a deviation (e) of a detected current value (I0) indicative of a current flowing through the solenoid 92, detected by the current detection circuit 14 from the current instruction value (Ir) outputted from the hydraulic pressure instruction value - current instruction map 151. The integration correction calculation unit 162 calculates an integration correction value by adding the preceding integration correction amount to the deviation (e). Simultaneously, the proportional correction calculation unit 163 calculates a proportional correction value based on the deviation (e). The integration correction value and the proportional correction value are added by the adder 164, and again added by the adder 153 in the PWM output circuit 15 as a correction value, and outputted to the solenoid driving circuit 12. In other words, the current feedback circuit 16 adds the current instruction value (Ir), which is a current feedforward component, and the current feedback value or subtracts the latter from the former to perform a feedback control such that the detected current value (Io) matches the current instruction value (Ir).

Here, for providing faster responsibility and higher stability for controlling the current, it is critical in the current feedback control performed by the current feedback circuit 16 to accurately detect a current through the solenoid for controlling the current, and detect the current with a high responsibility. A method of detecting a power device current ID flowing through the shunt resistor 123 will be described later in detail with reference to Fig. 4.

Next, referring to Fig. 4, description will be made on the configuration of the current detection circuit 14 for detecting the power device current ID flowing through the shunt resistor 123 in the automobile transmission which is applied with the hydraulic control apparatus for an automobile according to this embodiment.

Reference numerals identical to those in Figs. 1 to 3 indicate the same parts.

The current detection circuit 14 comprises an amplifier circuit 140 and a sample hold circuit 141. The amplifier circuit 140 is composed of an operational amplifier 142; input resistors R1, R2; feedback resistors R3, R4; and an output resistor R5. The sample hold circuit 141 is composed of an analog switch 142 and a capacitor 143. The analog switch 142 in the sample hold circuit 141 turns ON and OFF in synchronism with a PWM signal from the microcomputer 101. During ON state, an output signal from the amplifier 140 is outputted as it is, while during OFF state, a voltage charged on the capacitor 143 immediately before the analog switch 142 turns OFF is held. In other words, the analog switch 142 is operated on the basis of the PWM signal serving as a control signal for the power device of the solenoid driving circuit to sample and hold a detected value of a current flowing through the power device.

The power device current ID flowing through the power device 121 is detected as a shunt resistor voltage DV which is a voltage applied across the shunt resistor 123, and amplified by the amplifier circuit 140. The shunt resistor 123 has one end at the ground potential. Since the shunt resistor 123 is used for detecting a current, it has a smaller resistance. Therefore, the shunt resistor voltage VD is lower than a driving voltage for the amplifier circuit 140, for example, five volts, so that the operational amplifier 142 itself can be implemented by an ordinary amplifier rather than an expensive insulating type current detector. An output voltage VDA of the operational amplifier 142 is held in the sample hold circuit 141 which operates in synchronism with the control signal PWM outputted from the microcomputer 101. An output voltage VDH of the sample hold circuit 141 is inputted to an A/D input terminal of the microcomputer 101, and converted to a digital signal by an A/D converter built in the microcomputer 101.

The microcomputer 101 has the function of the control circuit 11 illustrated in Fig. 3. Therefore, a power device current ID detected by the current detector 14 is compared in the microcomputer 101 with a control signal for a solenoid current, calculated from a difference between a current instruction Ir converted from a hydraulic pressure instruction and a detected solenoid current signal IO, and the duty ratio of the control signal PWM is varied such that the power device current ID matches the control signal for the solenoid current, thereby feedback controlling the solenoid current.

In principle, for controlling a hydraulic pressure using a solenoid, a current instruction is provided on the basis of a hydraulic pressure instruction, and converted to Duty with which the solenoid is controlled in a feedforward control scheme. Actually, however, since variations in external temperature cause a voltage Vb of a buttery B to vary, a current flowing through the solenoid coil 92 may vary in response to the varying buttery voltage Vb even if the control signal PWM outputted from the microcomputer 101 is constant. In other words, as the buttery voltage becomes lower, a current flowing through the solenoid coil is reduced. In addition, from the fact that variations in oil temperature in a hydraulic mechanism causes the resistance of the solenoid coil to vary, a current flowing through the solenoid 92 also varies.

Even for such variations in the solenoid current, the solenoid can be highly accurately controlled by detecting the power device current ID to add a feedback control by a current to a feedforward control.
Specifically, when the battery voltage becomes lower to reduce a current flowing into the solenoid even while the control signal PWM outputted from the microcomputer 101 is constant, a feedback control is performed such that the solenoid current is increased to compensate for a reduced portion of the solenoid current, thereby making it possible to highly accurately control a hydraulic pressure using the solenoid.

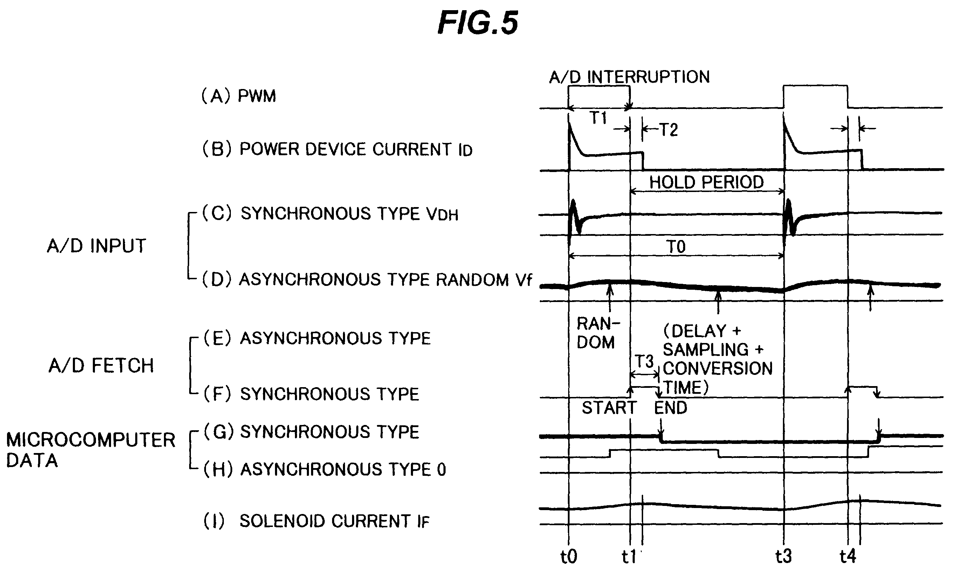

Next, referring to Fig. 5, description will be made on a variety of current and voltage waveforms and the current detection principles in the current detection circuit 14 in an automobile transmission which is applied with the hydraulic control apparatus for an automobile according to this embodiment illustrated in Fig. 4.

Reference numerals identical to those in Figs. 1 to 4 indicate the same parts.

(A) of Fig. 5 illustrates the waveform of the control signal PWM from the microcomputer 101, i.e., the PWM signal serving as a control signal outputted from the control circuit 11 (corresponding to the microcomputer 101). The control signal PWM is a repetitive pulse which turns ON at time t0, turns OFF at time t1, and subsequently turns ON at time t3 and turns OFF at time t4.

The period T0 of the pulse is, for example, fixed, while an ON time T1 of the pulse is variable and is determined by the sum of a duty determined from a hydraulic pressure instruction and a duty determined from a current feedback control. By changing the ON time T1 of the pulse, the duty ratio (T1/T0) of the pulse is changed. For example, the period T0 may be 2.5 ms, while the duty ratio (T1/T0) is variable in a range of 5 % (0.125 ms (=125 µm)) to 95 % (2.375 ms). In some cases, the period T0 may be variable.

(B) o f Fig. 5 illustrates the waveform of the power device current ID which begins flowing when the control signal PWM turns ON. At this time, an eddy current flows due to the influence of a recovery characteristic or the like of the diode 122. Also, when the control signal PWM turns OFF, the current becomes zero with a delay of a time T2 due to a delayed operation of a power MOSFET. A delay time T lasts several µs.

A voltage VD detected by the shunt resistor 123 through which the power device current ID flows is amplified by the operational amplifier 142. In this event, the high frequency characteristic of the operational amplifier 142 causes such phenomena as oscillations of the voltage VD upon rising VD at time t0, a delay upon falling at time t1, and so on.

To remove the influence due to a variety of fluctuations, this embodiment employs the sample hold circuit 141 before supplying the voltage VD to the microcomputer 101. The timing for sample and hold operations is such that the analog switch 142 in the sample hold circuit 141 is turned OFF at times t1, t4, i.e., in synchronism with falling edges of the PWM signal to hold the preceding amplifier output voltage VDA in the capacitor 143. Actually, since the PWM signal is a pulse signal as illustrated in (A) o f Fig. 5, the analog switch 142 turns OFF when the pulse signal transitions from ON to OFF to hold the amplifier output voltage VDA immediately before the analog switch 142 turns OFF on the capacitor 143.

Therefore, the current detection signal VDH, which is the output of the sample hold circuit 141, is equal to the amplifier output voltage VDA from time t0 to time t1, but after time t1, the current detection signal VDH is held at the voltage immediately before that, as illustrated in (C) of Fig. 5.

As illustrated in (F) of Fig. 5, the A/D converter in the microcomputer 101 is triggered in synchronism with the falling of the PWM signal to start fetching the current detection signal VDH, which is the output of the sample hold circuit 141 for A/D conversion (hereinafter, the scheme employed by the present invention is called the "synchronous type"). By thus regulating the timing for the A/D conversion, variations in data due to variations in timing are eliminated. A time T3 required for the A/D conversion from the beginning to the end may be in a range of several µs to several tens of µs in this embodiment, although it depends on the value of an analog signal to be converted.

When the A/D conversion is ended, a converted digital signal is fetched into the microcomputer 101 as illustrated in (G) of Fig. 5.

(I) of Fig. 5 illustrates the waveform of a real current flowing through the solenoid coil 92. In the solenoid current IF, a current flowing from time t0 to time t1 corresponds to a current flowing through the power device 121, and a current flowing from time t1 to time t3 corresponds to a fly wheel current flowing through the diode 122in Fig. 2. Thus, it is possible to detect a current value free from influences such as oscillations of a current upon rising, since a current value immediately before the solenoid driving circuit is turned OFF can be fetched.

Here, a method of detecting a current in a prior art PWM operation will be discussed again with reference to Fig. 5 as a reference for describing this embodiment.

It is assumed herein that the prior art scheme is called the "asynchronous type" in contrast with the scheme in this embodiment called the synchronous type. In the asynchronous type, a current is detected using a filer circuit composed of a resistor and a capacitor to smooth an inputted signal. An A/D input waveform Vf to an A/D converter in the asynchronous type is illustrated in (D) o f Fig. 5. This current detection signal is fetched for A/D conversion at random as illustrated in (D) of Fig. 5. Therefore, data fetched into a microcomputer is asynchronous with the period of PWM, as illustrated in (H) o f Fig. 5, whereby causing variations in the data fetched into the microcomputer, as will be later described.

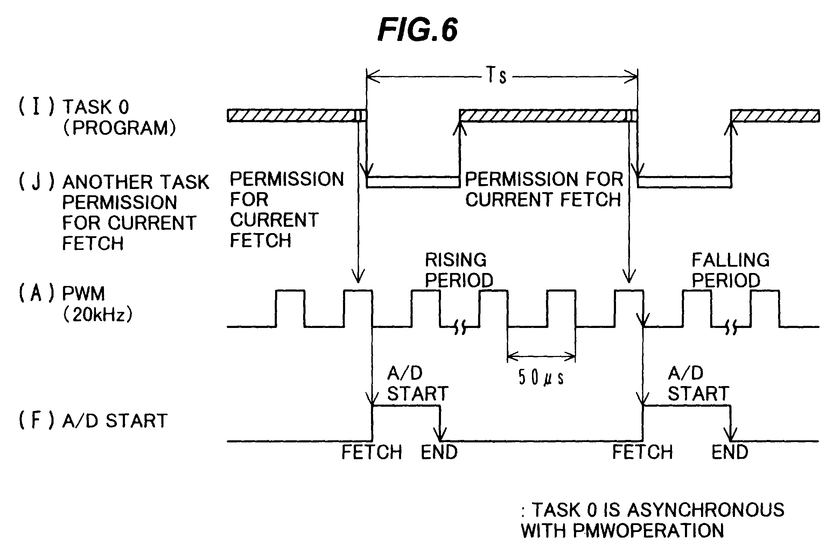

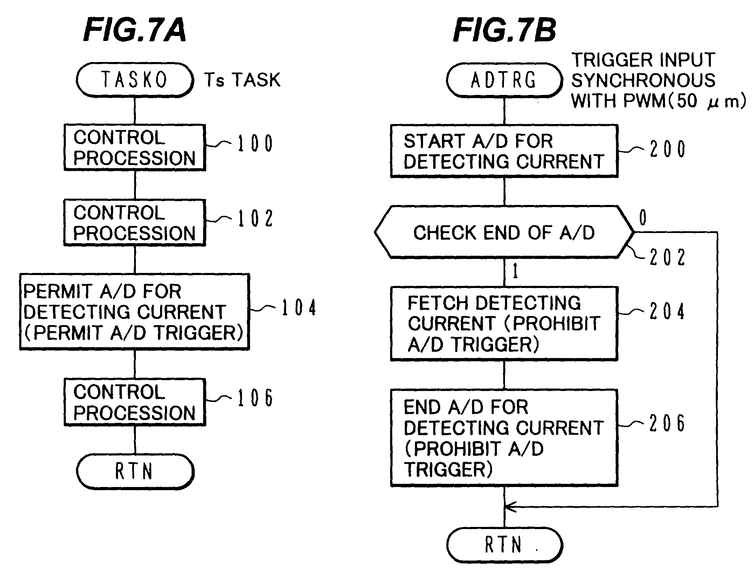

Next, referring to Fig. 6, description will be made on the timing for the processing through software for detecting a current in the microcomputer 101 which serves as a control circuit for the automobile transmission which is applied with the hydraulic control apparatus for an automobile according to this embodiment, and the contents of the software processing will be described with reference to Fig. 7.

Reference numerals identical to those in Figs. 1 to 5 indicate the same parts.

(I) of Fig. 6 illustrates the execution of software for a task 0, and (J) of Fig. 6 illustrates the execution of software for another task. As illustrated in (I) of Fig. 6, a program for the task 0 is executed, for example, every Ts. After executing the program for the task 0, the other task illustrated in (J) of Fig. 6 is executed.

As illustrated in (a) of Fig. 7, the program for the task 0 includes a plurality of processing steps, wherein control processing step 100, control processing step 102 and so on are executed in order when the task 0 is initiated, and a permission for A/D conversion for detecting a current is set at processing step 104. Specifically, as illustrated in (I) of Fig. 6, a permission for fetching a current into the A/D converter is set. Subsequently, another control processing step 106 is executed, followed by the software processing returning to execute another task.

The PWM signal for hardware is operated in a shorter time than and asynchronously with the processing time of the task 0 by the program. Therefore, after the permission for fetching a current, the A/D conversion is initiated in synchronism with a falling edge of the PWM signal outputted, for example, through a 500 µm or 50 µm operation, as illustrated in (A) of Fig. 6.

When the A/D conversion illustrated in (b) of Fig. 7 is initiated, it is checked at processing step 202 whether the A/D conversion is terminated. When the A/D conversion has been terminated, a detected current value is fetched at processing step 204 as illustrated in (F) of Fig. 6. Then, at processing step 206, the A/D conversion for detecting a current is terminated.

While the PWM is operating much faster than the program, for example, at 50 µm periods, an operation for fetching a current value is executed by software every 1 ms once per 20 PWM operations. While the detection of a current takes 1 ms and is late as compared with the PWM operation taking 50 µs, the control processing using the detected current value also takes 1 ms, so that this will not cause any problems in particular. If the period of control by the software is longer, i.e., in a range of several milliseconds to several tens of milliseconds, the current detection period may be longer without problems.

The method as described allows an instantaneous current to be fetched immediately before a power device in a solenoid driving circuit is turned OFF. In the description of Fig. 5, the fetching for A/D conversion ((F) of Fig. 5) is performed corresponding to the pulse of the PWM ((A) of Fig. 5). Actually, however, the current value fetching operation is executed once per 20 PWM operations, for example, every 1ms or 10 ms, as described above. Also, by increasing a chopper frequency to reduce ripples in a current, a value close to an average current can be fetched.

(A) of Fig. 6 corresponds to (A) of Fig. 5, while (F) of Fig. 6 corresponds to (F) of Fig. 5.

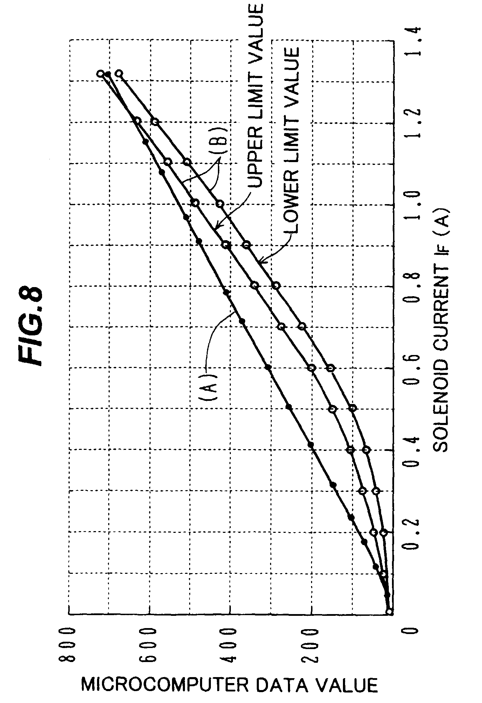

Next, referring to Fig. 8, description will be made on a solenoid current detection characteristic in the control circuit for a linear solenoid used in the automobile transmission which is applied with the hydraulic control apparatus for an automobile according to this embodiment.

The solenoid current detection characteristic A according to this embodiment is plotted with the horizontal axis representing an actually measured solenoid current IF when it is controlled by the microcomputer 101 and the vertical axis representing a microcomputer data value converted to a digital signal through the sample hold circuit 141 and the A/D converter built in the microcomputer 101.

For reference, a solenoid current detection characteristic B in a prior art scheme is also shown in Fig. 8. In this scheme, the solenoid current detection characteristic B is plotted with the horizontal axis representing an actually measured solenoid current IF when it is controlled by a microcomputer 101 and the vertical axis representing a microcomputer data value converted to a digital signal through a filter circuit and an A/D converter built in a microcomputer.

As is apparent from the graph, the scheme according to this embodiment exhibits an extremely high linearity between the actually measured solenoid current values and the detected microcomputer data values from a low current to a high current. In addition, the detected microcomputer values are substantially free from variations, and are aligned along the straight line in the graph. It is also possible to detect a small fraction of the solenoid current equal to or lower than 0.2 A.

The prior art scheme, on the other hand, presents a poor linearity since actually detected solenoid current values and detected microcomputer values are nonlinear with respect to the solenoid current. Also, the microcomputer data cannot be detected in a region in which a smaller solenoid current is present, because the detected microcomputer data are smaller in that region. In addition, since the detected microcomputer values largely vary as indicated by an upper limit value and a lower limit value thereof, it cannot be used as a solenoid current detection signal.

In this embodiment, it is apparent that the continuously varying solenoid current can be detected in good approximation by detecting an intermittent power device current.

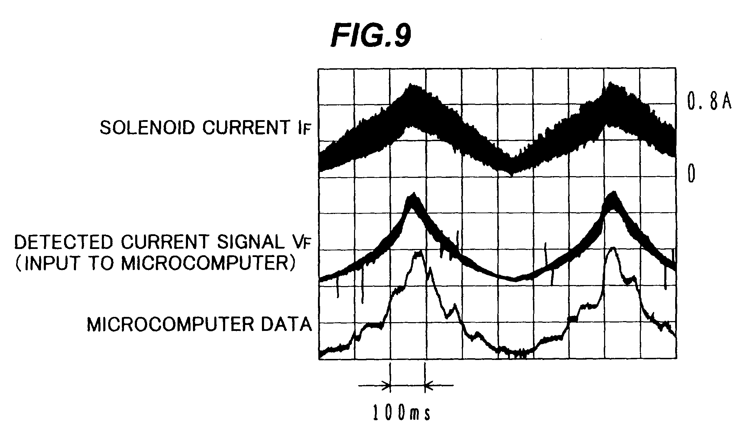

Here, referring to Fig. 9, description will be made on the reason why the microcomputer data values corresponding to detected values exhibits large variations in the prior art scheme as indicated by the upper limit value and the lower limit value.

For the solenoid current IF flowing into the solenoid 92, the microcomputer provides an instruction value as illustrated in the top waveform in Fig. 9. In Fig. 9, the horizontal axis has a 100-ms scale, and the instruction value is changed such that the solenoid current will change at periods of 550 ms in triangle waveform. The waveform in the middle of Fig. 9 illustrates the output of the filter circuit, and the waveform of a current detection signal Vf, inputted to the microcomputer, is also illustrated.

The solenoid current If changes in triangle waveform, and high frequency components are superimposed on components of the triangular wave. The current detection signal Vf, illustrated in (D) of Fig. 5, is not triangular but nonlinear. In addition, high frequency components are superimposed on the current detection signal Vf. The high frequency components include components of a peak value and a minimum value of ripples averaged by a filter in the current detection signal Vf illustrated in (D) of Fig. 5. The microcomputer data converted to a digital signal in the microcomputer 101 is produced by A/D converting the signal having ripples as illustrated in (D) of Fig. 5, so that the influence of the high frequency components appears as indicated by the current detection signal Vf in the waveform in the middle of Fig. 9. Thus, the prior art scheme exhibits the largely varying microcomputer values corresponding to detected values as indicated by the upper limit value and the lower limit value thereof.

In the scheme according to this embodiment, on the other hand, since the microcomputer data converted to a digital signal in the microcomputer 101 is produced by fetching the signal sampled and held by the sample hold circuit 141 into the microcomputer in synchronism with the PWM operation and then A/D converting the fetched signal, as illustrated in (C) of Fig. 5, the influence of high frequency components does not appear in the microcomputer data.

In summary, the prior art scheme is defective in that it exhibits a poor linearly for the solenoid current detection characteristic, and produces a varying detected value, and therefore cannot be employed for the control of a hydraulic linear solenoid which requires a highly accurate control.

As described above, since this embodiment is capable of detecting the solenoid current from a low current region with a good linearity, it is possible to achieve a highly accurate control for the solenoid in a small current region of the solenoid.

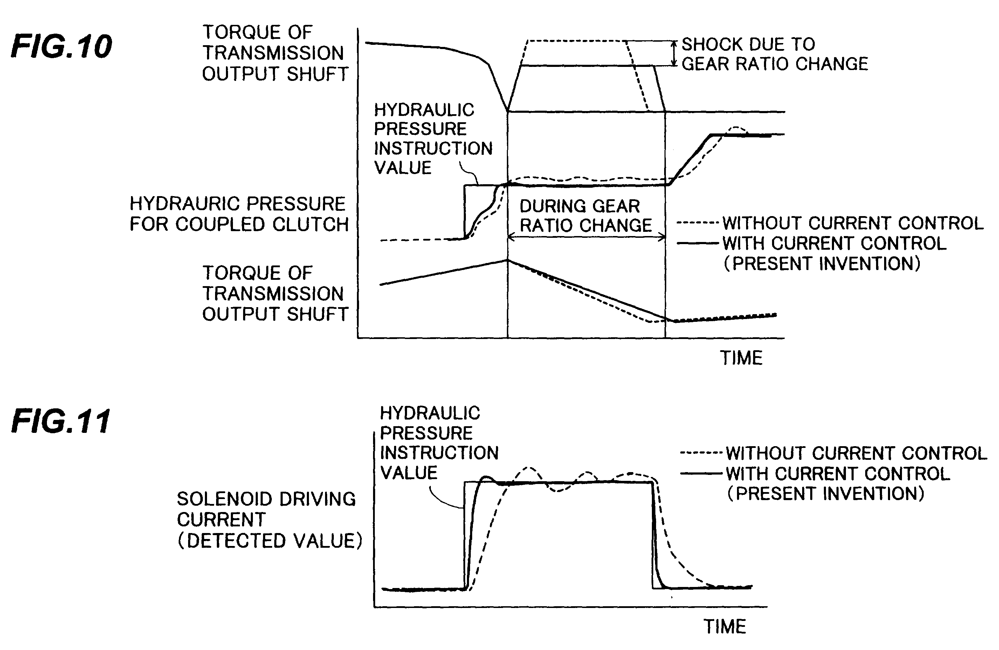

Next, referring to Figs. 10 and 11, description will be made on the control characteristics of the current detection method according to this embodiment when it is used to control a torque of an output shaft of a transmission.

For actuating the automatic transmission 1 illustrated in Fig. 1 to change the gear ratio, for example, the clutch 8 must be coupled. For coupling the clutch 8 for this purpose, the control circuit illustrated in Fig. 2 is supplied with a hydraulic pressure instruction value which exhibits a step-like change as illustrated in Fig. 10. The control circuit 11 outputs a PWM signal in response to this hydraulic pressure instruction value to turn the solenoid driving circuit 12 ON and OFF to displace the linear solenoid 9, thereby outputting a hydraulic output from the hydraulic mechanism 13. Different hydraulic outputs are produced between the prior art scheme without current control indicated by a wave line in the graph, and this embodiment performing the current control indicated by a solid line in the graph. More specifically, in the prior art scheme employing a feedforward control, the hydraulic output is larger than the hydraulic pressure instruction value, leading to a large increase in the torque of the output shaft of the transmission. On the other hand, the scheme according to this embodiment feedback controls a detected current with an improved current detection accuracy, so that a maximum value of the hydraulic output is substantially the same as the hydraulic pressure instruction value. As a result, the torque of the output shaft of the transmission also becomes substantially the same as the value of a torque before starting a gear ration change.

Here, a solenoid driving current will be described with reference to Fig. 11.

A current instruction value for the solenoid driving current has a value which changes in steps in a manner similar to the hydraulic pressure instruction values illustrated in Fig. 10. A detected solenoid driving current, on the other hand, changes as indicated by a solid line in the graph. A solenoid driving current according to the prior art scheme changes as indicated by a wave line in the graph. More specifically, since this embodiment improves the driving current detection accuracy, the solenoid driving current promptly follows the current instruction value and reaches the current instruction value in a short time because of a small overshoot with respect to the current instruction value. Thus, as previously illustrated in Fig. 10, a hydraulic pressure for coupling a clutch also exhibits an improved responsibility to the hydraulic pressure instruction value, so that it is possible to promptly generate a predetermined hydraulic pressure during a gear ratio change, bring the torque of the output shaft of the transmission to a desired value equivalent to that before the gear ratio change, reduce a shock due to the gear ratio change, and improve the responsibility during the gear ratio change resulting from a reduced time required for the gear ratio change.

On the other hand, as illustrated in Fig. 11, since the prior art scheme exhibits a poor detection responsibility and detection accuracy for the driving current, resulting in a poor responsibility to the current instruction value and a larger overshoot with respect to the current instruction value, a longer time is taken to reach the current instruction value. Thus, as indicated by a wave line in Fig. 10, a longer time is taken for a hydraulic pressure for coupling a clutch to reach the hydraulic pressure instruction value. In addition, since the torque of the output shaft of the transmission during a gear ratio change is larger as compared with that before the gear ratio change, a larger shock is produced due to the gear ratio change.

Generally, since a shock due to a gear ratio change in an automatic transmission is produced because of a large change in a torque of an output shaft of the transmission during a gear ratio change, the prior art scheme suffers from a larger shock due to a gear ratio change because the torque of the output shaft largely varies. Since this embodiment has less variations in the torque of the output shaft, the shock due to a gear ratio change can be reduced. Consequently, the engine rotational speed also reaches a desired value promptly.

As described above, the hydraulic control apparatus according to the first embodiment can readily detect a current flowing into a linear solenoid for driving the linear solenoid in a hydraulic control to achieve a feedback control for the current into the linear solenoid.

Since an instantaneous value of a power device current is detected, a fast detection response is provided. Also, a detected solenoid current exhibits an extremely good linearity from a low current to a high current.

Since the solenoid current is A/D converted in synchronism with the PWM signal, the timing of fetching the current does not largely deviate, and a detected solenoid current value is substantially free from variations.

The hydraulic control apparatus according to the first embodiment can also detect a small solenoid current such as 0.2 A or less.

Since the solenoid current can be highly accurately controlled, it is possible to highly accurately control a clutch with a hydraulic control, thus improving the response of an automatic transmission control for an automobile.

Ripples in the current can be reduced by increasing the PWM frequency for the solenoid driving current, making it possible to fetch a value close to an average current.

Therefore, according to the first embodiment, it is possible to perform a feedback control for a current supplied to a linear solenoid with a high accuracy and a faster response to a current instruction value.

It is also possible to reduce a shock experienced during a gear ratio change by applying the control to an automatic transmission.

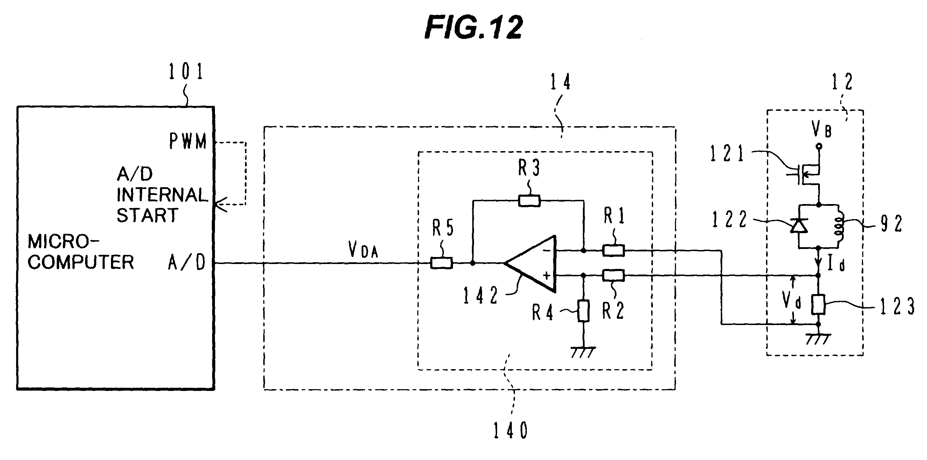

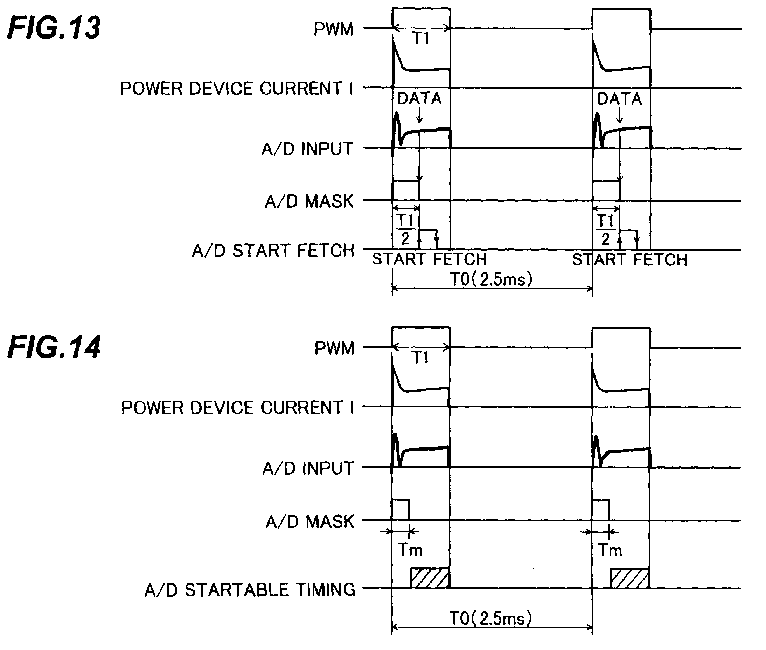

Next, referring to Figs. 12 and 13, description will be made on the configuration of an automatic transmission which is applied with a hydraulic control apparatus for an automobile according to a second embodiment of the present invention.

The structure of the automobile transmission applied with the hydraulic control apparatus for an automobile according to the second embodiment is generally similar to that illustrated in Fig. 1. Also, the configuration of a hydraulic control circuit 10 for a linear solenoid 9 used in the automobile transmission applied with the hydraulic control apparatus for an automobile according to the second embodiment is similar to that illustrated in Fig. 2. Further, the configuration of a control circuit 11 used in the automobile transmission applied with the hydraulic control apparatus for an automobile according to the second embodiment is similar to that illustrated in Fig. 3.

Here, referring to Fig. 12, description will be made on the configuration of a current detection circuit 14A for detecting a power device current ID which flows through a shunt resistor 123 in the automobile transmission which is applied with the hydraulic control apparatus for an automobile according to the second embodiment. Reference numerals identical to those in Figs. 1 to 3 indicate the same parts.

Fig. 12 is a block diagram illustrating the configuration of the current detection circuit for use in the automobile transmission which is applied with the hydraulic control apparatus for an automobile according to the second embodiment of the present invention.

The current detection circuit 14A comprises an amplifier circuit 140. The amplifier circuit 140 is composed of an operational amplifier 142; input resistors R1, R2; feedback resistors R3, R4; and an output resistor R5.

The power device current ID flowing through a power device 121 is detected as a shunt resistor voltage VD which is a voltage applied across the shunt resistor 123, and amplified by the amplifier 140. The shunt resistor 123 has one end at the ground potential. Since the shunt resistor 123 is used for detecting a current, it has a smaller resistance. Therefore, the shunt resistor voltage VD is lower than a driving voltage for the amplifier circuit 140, for example, five volts, so that the operational amplifier 142 itself can be implemented by an ordinary amplifier rather than an expensive insulating type current detector. An output voltage VDA of the operational amplifier 142 is inputted to an A/D input terminal of the microcomputer 101, and converted to a digital signal by an A/D converter built in the microcomputer 101.

In the second embodiment, the A/D converter in the microcomputer 101 internally starts to operate in response to a PWM output of the microcomputer 101. In other words, the timing of starting the A/D converter is controlled to improve the detection accuracy for the power device current ID. Details on this control will be described later with reference to Fig. 13.

The microcomputer 101 has the function of the control circuit 11 illustrated in Fig. 3. Therefore, a power device current ID detected by the current detector 14 is compared with a control signal for a solenoid current, calculated from a difference between a current instruction Ir converted from a hydraulic pressure instruction and a detected solenoid current signal IO, and the duty ratio of the control signal PWM is varied such that the power device current ID matches the control signal for the solenoid current, thereby feedback controlling the solenoid current.

In principle, for controlling a hydraulic pressure using a solenoid, a current instruction is provided on the basis of a hydraulic instruction, and converted to Duty with which the solenoid is controlled in a feedforward control scheme. Actually, however, since variations in external temperature cause a voltage Vb of a buttery B to vary, a current flowing through the solenoid coil 92 may vary in response to the varying buttery voltage Vb even if the control signal PWM outputted from the microcomputer 101 is constant. In other words, as the buttery voltage becomes lower, a current flowing through the solenoid coil is reduced. In addition, from the fact that variations in oil temperature in a hydraulic mechanism causes the resistance of the solenoid coil to vary, a current flowing through the solenoid 92 also varies.

Even for such variations in the solenoid current, the solenoid can be highly accurately controlled by detecting the power device current ID to add a feedback control by a current to a feedforward control. Specifically, when the battery voltage becomes lower to reduce a current flowing into the solenoid even while the control signal PWM outputted from the microcomputer 101 is constant, the solenoid current is increased for feedback control to compensate for a reduced portion of the solenoid current, thereby making it possible to highly accurately control a hydraulic pressure using a solenoid.

Next, referring to Fig. 13, description will be made on a variety of current and voltage waveforms and the current detection principles in the current detection circuit 14A in an automobile transmission which is applied with the hydraulic control apparatus for an automobile according to the second embodiment.

Fig. 13 illustrates waveform charts for describing a variety of currents and voltages and the current detection principles in the current detection circuit in the automobile transmission which is applied with the hydraulic control apparatus for an automobile according to the second embodiment of the present invention.

PWM on the top of Fig. 13 illustrates a control signal PWM from the microcomputer 101 which is a PWM signal serving as a control signal outputted from the control circuit 11 (corresponding to the microcomputer 101). The control signal PWM is a repetitive pulse which alternately turns ON and OFF.

The period T0 of the pulse is, for example, fixed, while an ON time T1 of the pulse is variable and is determined by the sum of a duty determined from a hydraulic pressure instruction and a duty determined from a current feedback control. By changing the ON time T1 of the pulse, the duty ratio (T1/T0) of the pulse is changed. For example, the period T0 may be 2.5 ms, while the duty ratio (T1/T0) is variable in a range of 5 % (0.125 ms (=125 µm)) to 95 % (2.375 ms).

The second waveform from the top in Fig. 13 illustrates the power device current ID which begins flowing when the control signal PWM turns ON. At this time, an eddy current flows due to the influence of a recovery characteristic or the like of the diode 122.

A voltage VD detected by the shunt resistor 123 through which the power device current ID flows is amplified by the operational amplifier 142. In this event, the high frequency characteristic of the operational amplifier 142 causes such phenomena as oscillations of the voltage VD upon rising, a delay upon falling, and so on. This also causes the A/D input to fluctuate as illustrated by the third waveform from the top in Fig. 13.

To remove the influences of a variety of fluctuations, the second embodiment controls the timing of starting the A/D converter for fetching this signal into the microcomputer 101.

Specifically, as illustrated in Fig. 12, the microcomputer 101 determines the timing of starting the A/D converter in response to the PWM output. In this event, a mask (A/D mask) is applied to prevent the A/D conversion in synchronism with a rising edge of PWM, as illustrated in the fourth waveform from the top in Fig. 13. The duration of the A/D mask is chosen to be one half of the ON duty period T1 of PWM, i.e., (1/2)T1. Since the ON duty period T1 of PWM is a value calculated within the microcomputer 101, a counter may be started in synchronism with a rising edge of PWM to count a time for the period (1/2)T1, thereby permitting an easy measurement of the A/D mask duration.

When the A/D mask duration expires, the A/D converter is started to begin fetching data into the A/D converter, as illustrated in the fifth waveform from the top in Fig. 13. By thus regulating the timing of the A/D conversion, data is free from variations due to varying timing. When the A/D conversion is completed, a converted digital signal is fetched into the microcomputer 101.

The power device current A/D converted by the A/D converter is inputted at the timing indicated by an arrow ↓ in the third waveform, labeled A/D input, from the top in Fig. 13. A current flowing into the solenoid is a pulsed current similar to the solenoid current previously illustrated in (I) of Fig. 5, so that it is preferably controlled using its average current. In this respect, since the power device current at the timing (1/2)T1 of the ON duty period T1 of PWM presents a value close to the average value of the pulsed current, a current detection accuracy can be further improved.

As described above, the hydraulic control apparatus according to the second embodiment can readily detect a current flowing into a linear solenoid for driving the linear solenoid in a hydraulic control to achieve a feed back control for the current through the linear solenoid.

Since an instantaneous value of a power device current is detected, a fast detection response is provided. Also, a detected solenoid current exhibits an extremely good linearity from a low current to a high current.

Since the solenoid current is A/D converted in synchronism with the PWM signal, the timing of fetching the current does not largely deviate, and a detected solenoid current value is substantially free from variations.

The hydraulic control apparatus according to the second embodiment can also detect a small solenoid current such as 0.2 A or less.

Since the solenoid current can be highly accurately controlled, it is possible to highly accurately control a clutch with a hydraulic control, thus improving the response of an automatic transmission control for an automobile.

Ripples in the current can be reduced by increasing the PWM frequency for the solenoid driving current, making it possible to fetch a value close to an average current.

Therefore, according to this embodiment, it is possible to perform a feedback control for a current supplied to a linear solenoid with a high accuracy and a faster response to a current instruction value.

It is also possible to reduce a shock experienced during a gear ratio change by applying the control to an automatic transmission.

Next, referring to Fig. 14, description will be made on the structure of an automatic transmission which is applied with a hydraulic control apparatus for an automobile according to a third embodiment of the present invention.

The structure of the automobile transmission applied with the hydraulic control apparatus for an automobile according to the third embodiment is generally similar to that illustrated in Fig. 1. Also, the configuration of a hydraulic control circuit 10 for a linear solenoid 9 used in the automobile transmission applied with the hydraulic control apparatus for an automobile according to the third embodiment is similar to that illustrated in Fig. 2. Further, the configuration of a control circuit 11 used in the automobile transmission applied with the hydraulic control apparatus for an automobile according to the third embodiment is similar to that illustrated in Fig. 3. Furthermore, the configuration of a current detection circuit 14A is similar to that of Fig. 12.

Here, referring to Fig. 14, description will be made on a variety of current and voltage waveforms and the current detection principles in the current detection circuit 14A in an automobile transmission which is applied with the hydraulic control apparatus for an automobile according to the third embodiment.

Fig. 14 illustrates waveform charts for describing a variety of currents and voltages and the current detection principles in the current detection circuit in the automobile transmission which is applied with the hydraulic control apparatus for an automobile according to the third embodiment of the present invention.

PWM on the top of Fig. 14 illustrates a control signal PWM from a microcomputer 101, similar to Fig. 13, which is a PWM signal serving as a control signal outputted from the control circuit 11 (corresponding to a microcomputer 101). The control signal PWM is a repetitive pulse which alternately turns ON and OFF.

The second waveform from the top in Fig. 14 illustrates a power device current ID, like Fig. 13, which begins flowing when the control signal PWM turns ON. At this time, an eddy current flows due to the influence of a recovery characteristic or the like of a diode 122.

A voltage VD detected by a shunt resistor 123 through which the power device current ID flows is amplified by an operational amplifier 142. In this event, the high frequency characteristic of the operational amplifier 142 causes such phenomena as oscillations of the voltage VD upon rising, a delay upon falling, and so on. This also causes the A/D input to fluctuate as illustrated by the third waveform from the top in Fig. 14.

To remove the influences of a variety of fluctuations, the third embodiment controls the timing of starting an A/D converter for fetching this signal into the microcomputer 101.

Specifically, as illustrated in Fig. 12, the microcomputer 101 determines the timing of starting the A/D converter in response to the PWM output. In this event, a mask (A/D mask) is applied to prevent the A/D conversion in synchronism with a rising edge of PWM, as illustrated in the fourth waveform from the top in Fig. 14. The duration of the A/D mask is chosen to be a fixed period Tm. Since the power device current oscillates for approximately 5 µs at rising transition, the period Tm may be chosen to be a time equal to or longer than 5 µs, for example, 10 µs.

When the A/D mask duration expires, the A/D converter is started to begin fetching data into the A/D converter, as illustrated in the fifth waveform from the top in Fig. 14. By thus regulating the timing of the A/D conversion, data is free from variations due to varying timing. When the A/D conversion is completed, a converted digital signal is fetched into the microcomputer 101.

As described above, the hydraulic control apparatus according to the third embodiment can readily detect a current flowing into a linear solenoid for driving the linear solenoid in a hydraulic control to achieve a feed back control for the current through the linear solenoid.

Since an instantaneous value of a power device current is detected, a fast detection response is provided. Also, a detected solenoid current exhibits an extremely good linearity from a low current to a high current.

Since the solenoid current is A/D converted in synchronism with the PWM signal, the timing of fetching the current does not largely deviate, and a detected solenoid current value is substantially free from variations.

The hydraulic control apparatus according to the third embodiment can also detect a small solenoid current such as 0.2 A or less.

Since the solenoid current can be highly accurately controlled, it is possible to highly accurately control a clutch with a hydraulic control, thus improving the response of an automatic transmission control for an automobile.

Ripples in the current can be reduced by increasing the PWM frequency for the solenoid driving current, making it possible to fetch a value close to an average current.

Therefore, according to the third embodiment, it is possible to perform a feedback control for a current supplied to a linear solenoid with a high accuracy and a faster response to a current instruction value.

It is also possible to reduce a shock experienced during a gear ratio change by applying the control to an automatic transmission.

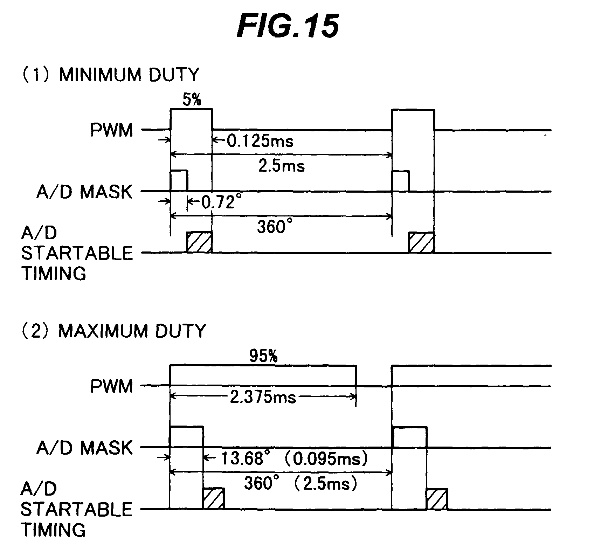

Next, referring to Fig. 15, description will be made on the structure of an automatic transmission which is applied with a hydraulic control apparatus for an automobile according to a fourth embodiment of the present invention.

The structure of the automobile transmission applied with the hydraulic control apparatus for an automobile according to the fourth embodiment is generally similar to that illustrated in Fig. 1. Also, the configuration of a hydraulic control circuit 10 for a linear solenoid 9 used in the automobile transmission applied with the hydraulic control apparatus for an automobile according to the fourth embodiment is similar to that illustrated in Fig. 2. Further, the configuration of a control circuit 11 used in the automobile transmission applied with the hydraulic control apparatus for an automobile according to the fourth embodiment is similar to that illustrated in Fig. 3. Furthermore, the configuration of a current detection circuit 14A is similar to that of Fig. 12.

Here, referring to Fig. 15, description will be made on a variety of current and voltage waveforms and the current detection principles in the current detection circuit 14A in an automobile transmission which is applied with the hydraulic control apparatus for an automobile according to the fourth embodiment.

Fig. 15 illustrates waveform charts for describing a variety of currents and voltages and the current detection principles in the current detection circuit in the automobile transmission which is applied with the hydraulic control apparatus for an automobile according to the fourth embodiment of the present invention.

PWM on the top of Fig. 15 illustrates a control signal PWM from a microcomputer 101, similarly to Fig. 13, which is a PWM signal serving as a control signal outputted from a control circuit 11 (corresponding to a microcomputer 101). The control signal PWM is a repetitive pulse which alternately turns ON and OFF.

The voltage and current waveforms of a power device current ID and an A/D input are similar to those illustrated in Fig. 14. The power device current ID begins flowing when the control signal PWM turns ON. At this time, an eddy current flows due to the influence of a recovery characteristic or the like of a diode 122.

A voltage VD detected by a shunt resistor 123 through which the power device current ID flows is amplified by an operational amplifier 142. In this event, the high frequency characteristic of the operational amplifier 142 causes such phenomena as oscillations of the voltage VD upon rising, a delay upon falling, and so on. This also causes the A/D input to fluctuate as illustrated by the third waveform from the top in Fig. 14.

To remove the influences of a variety of fluctuations, the fourth embodiment controls the timing of starting an A/D converter for fetching this signal into the microcomputer 101.

Specifically, as previously illustrated in Fig. 12, the microcomputer 101 determines the timing of starting the A/D converter in response to the PWM output. In this event, a mask (A/D mask) is applied to prevent the A/D conversion in synchronism with a rising edge of PWM, as illustrated in the second waveform from the top in Fig. 15. The duration of the A/D mask is made variable in accordance with an ON period T1 of PWM. More specifically, the duty ratio (T1/T0) of the PWM pulse is variable in a range from 5 % (0.125 ms (=125 µs) to 95 % (2.375 ms), assuming that a period T0 is 2.5 ms. (1) of Fig. 15 illustrates associated waveforms when the duty ratio is at minimum, i.e., 5 %. In this case, since the power device current oscillates for approximately 5 µs at rising transition, the A/D mask duration may be chosen to be 5 µs. Assuming herein that the period T0 of PWM is 2.5 ms which corresponds to an angular distance of 360°, the PWM ON period T1 is calculated to be 18°. Consequently, 5 µs, which is the A/D mask duration, corresponds to 0.72°. In other words, the A/D mask duration is limited to 4 % of the PWM ON period T1 (=0.72/18). Also, the mask duration is 14.4° when the PWM ON period corresponds to 360 °. Stated another way, in the fourth embodiment, the A/D mask duration is limited within 14.4° of the PWM ON period.

(2) of Fig. 15 illustrates associated waveforms when the duty ratio is at maximum. In this case, the PWM ON period T1 is 2.375 ms which corresponds to 360°. The A/D mask duration is chosen to be 0.095 ms which corresponds to 14.4° with respect to the PWM ON period T1.

When the A/D mask duration expires, the A/D converter is started to begin fetching data into the A/D converter, as illustrated in the third waveform from the top in each of (1) and (2) of Fig. 15. By thus regulating the timing of the A/D conversion, data is free from variations due to varying timing. When the A/D conversion is completed, a converted digital signal is fetched into the microcomputer 101.

As described above, the hydraulic control apparatus according to the fourth embodiment can readily detect a current flowing into a linear solenoid for driving the linear solenoid in a hydraulic control to achieve a feed back control for the current through the linear solenoid.

Since an instantaneous value of a power device current is detected, a fast detection response is provided. Also, a detected solenoid current exhibits an extremely good linearity from a low current to a high current.

Since the solenoid current is A/D converted in synchronism with the PWM signal, the timing of fetching the current does not largely deviate, and a detected solenoid current value is substantially free from variations.

The hydraulic control apparatus according to the fourth embodiment can also detect a small solenoid current such as 0.2 A or less.

Since the solenoid current can be highly accurately controlled, it is possible to highly accurately control a clutch with a hydraulic control, thus improving the response of an automatic transmission control for an automobile.

Ripples in the current can be reduced by increasing the PWM frequency for the solenoid driving current, making it possible to fetch a value close to an average current.

Therefore, according to the fourth embodiment, it is possible to perform a feedback control for a current supplied to a linear solenoid with a high accuracy and a faster response to a current instruction value.

It is also possible to reduce a shock experienced during a gear ratio change by applying the control to an automatic transmission.

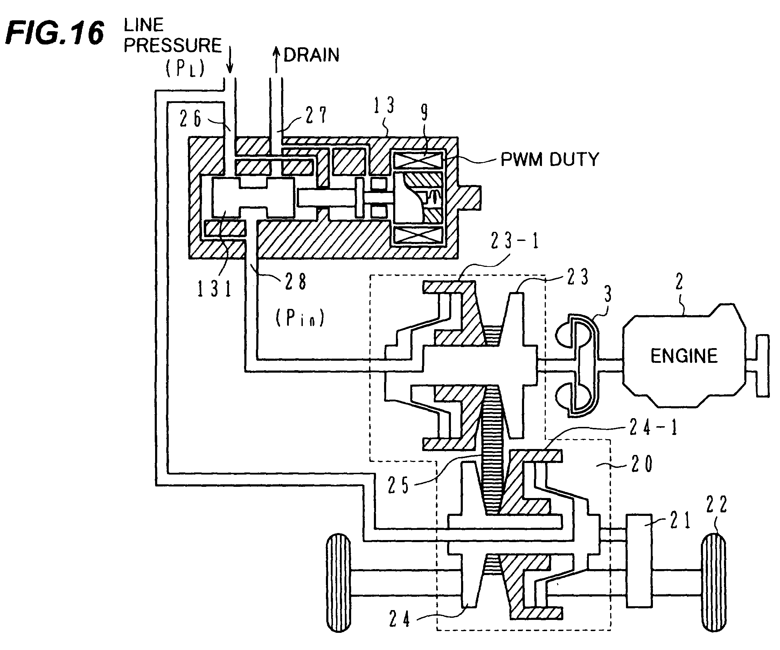

Next, referring to Fig. 16, description will be made on the structure of belt type continuously variable transmission which is applied with a hydraulic control apparatus for an automobile according to a fifth embodiment of the present invention. Reference numerals identical to those in Fig. 2 indicate the same parts.

Fig. 16 is a schematic diagram illustrating the structure of a belt type continuously variable transmission which is applied with the hydraulic control apparatus for an automobile according to the fifth embodiment of the present invention.

A driving force of an engine 2 is transmitted to a belt type continuously variable transmission 20 through a torque converter 3, and further transmitted to driven wheels 22 through a final decelerator 21 after controlled at a desired transmission gear ratio by the belt type continuously variable transmission 20.

The belt type continuously variable transmission 20 is composed of an input pulley 23; an output pulley 24; and a belt 25 for transmitting a driving force between the two pulleys 23, 24. A hydraulic pressure can act on a movable pulley 23-1 constituting the input pulley 23 and a movable pulley 24-1 constituting the output pulley 24 for actuating the pulleys 23, 24.

A hydraulic pressure Pin acting on the movable pulley 23-1 of the input pulley 23 is adjusted by a hydraulic mechanism 13. The hydraulic mechanism 13 comprises a three-way valve which is composed of a spool valve 131; a line pressure introducing hole 26; a drain hole 27; and an output hole 28. The spool valve 131 is driven by a linear solenoid 9, and an input pulley pressure Pin can be variably controlled by changing the opening areas of the line pressure introducing hole 26, the drain hole 27 and the output hole 28.

The linear solenoid 9 is connected to a hydraulic control circuit 10, as previously illustrated in Fig. 2, so that its displacement amount is controlled in proportion to an ON duty period of a solenoid control circuit 12 which is controlled by a PWM duty signal outputted from a control circuit 11 of the hydraulic control circuit 10.

Here, description will be made on the operation of the belt type continuously variable transmission according to the fifth embodiment.

As the ON period of the PWM duty signal is increased, the spool valve 131 is pushed toward the left in the figure to block the drain hole 27 and increase the opening area of the line pressure introducing hole 26, thereby increasing the input pulley pressure Pin. This causes the movable pulley 23-1 of the input pulley 23 to move toward the right. Thus, the belt 25 is applied with a force which moves the belt 25 toward the outer periphery of the input pulley 23. On the other hand, acted on the movable pulley 24-1 of the output pulley 24 is only a constant line pressure PL. As a result, a force which acts on the belt 25 to move the input pulley 23 toward the outer periphery becomes larger than the line pressure PL to increase a belt acting diameter. Conversely, it is extended on the output pulley 24 side so that the belt 25 has a smaller acting diameter.

By thus changing the acting diameter of the belt 25 extending between the two pulleys 23, 24, the transmission ratio is controlled.

Thus, in a transmission ratio control for a belt type continuously variable transmission, the transmission performance largely depends on a driving speed and accuracy of a linear solenoid. The linear solenoid 9 is controlled by the hydraulic control circuit 10 previously illustrated in Fig. 2, as described above. Details on the configuration and operation of the hydraulic control circuit 10 follow the description which has been made with reference to Figs. 3 to 14. In the fifth embodiment, a current flowing into a linear solenoid for use in a belt type continuously variable transmission can be feedback controlled in a higher accuracy and faster in response to a current instruction value.

As described above, the fifth embodiment enables a feedback control for a current flowing into a linear solenoid for use in a belt type continuously variable transmission faster in response to a current instruction value in a higher accuracy.

Alternatively, a fluid coupling, an electromagnetic clutch or the like may be used instead of the torque converter 3 in the description on the respective embodiments.

Also, the fifth embodiment is not limited to a belt type continuously variable transmission but may be similarly applied to a toroidal type continuously variable transmission.

While the foregoing embodiments have been described in connection with an apparatus for controlling a linear solenoid as an example of a hydraulic control apparatus for an automobile, the hydraulic control apparatus for an automobile is not limited to the hydraulic control for automatic transmission control. The present invention may also be applied to a control using a linear solenoid such as a brake control for an automobile or the like.

Also, while in the foregoing embodiments, the A/D converter for converting an output voltage of the sample hold circuit into a digital signal has been described as being built in the microcomputer, it is also possible to se an A/D converter discretely configured external to the microcomputer. In this case, an external trigger signal may be outputted from the microcomputer such that A/D conversion is initiated in synchronism with this external trigger signal.

In a type of system in which a microcomputer 101 outputs a data value related to a duty ratio of a PWM signal, and a PWM driving circuit outputs a pulse signal based on the data value as control signals PWM1, PWM2, an analog switch 121 may be actuated with a signal produced by taking logical OR of the control signals PWM1 and PWM2 outputted from the PWM driving circuit.

Also, in this event, the signal produced by taking logical OR of the control signals PWM1 and PWM2 outputted from the PWM driving circuit may be used as an external trigger signal for A/D conversion. while the timing for conducting an external interrupt to A/D conversion is such that a current flowing into a linear solenoid is sampled and held, and A/D converted in synchronism with a falling edge of the pulsed PWM control signal, these operations are not limited to this timing. Alternatively, a current flowing into a linear solenoid may be sampled and held, or A/D converted at the timing at the center of the pulsed PWM signal.

Since the embodiments as described above each have a feedback loop for controlling a current flowing into a linear solenoid, they are free from the influences of fluctuations in a battery voltage and fluctuations in winding resistance due to a varying temperature.

According to the present invention, a current flowing into a linear solenoid can be feedback controlled faster in response to a current instruction value in a high accuracy.

## Claims

1. A hydraulic control apparatus for an automobile adapted to control a hydraulic pressur force by a linear solenoid (9), wherein a control instruction to a driving current supply element connected to a winding of said solenoid (9) is controlled on the basis of the value of a current actually flowing into said linear winding, irrespective of variations in the resistance of said winding due to a temperature.

2. A hydraulic control apparatus for an automobile adapted to control a hydraulic pressure force by a linear solenoid (9), wherein a current instruction is generated on the basis of a hydraulic pressure instruction and supplied to current control means, the value of said current instruction is convered to a PWM duty instruction value and said PWM duty instruction is adjusted with a value derived at an output of said current control means to produce a PWM instruction value, and the value of a current flowing through a semiconductor device for supplying the winding of said linear solenoid (9) with a current is adjusted with said duty instruction value based on a PWM instruction, wherein a control instruction value for said semiconductor device is adjusted such that the current value increases as the winding of said linear solenoid (9) has a higher resistance in proportion to a varying temperature.

3. A hydraulic control method for an automobile adapted to control a hydraulic pressure force by a linear solenoid (9), wherein the value of a current flowing into a winding of said solenoid (9) is changed in accordance with a hydraulic pressure instruction signal and a current instruction signal, and adjusting said current value in accordance with the temperature of said solenoid (9) and/or a supply voltage.

4. A hydraulic control method for an automobile according to claim 3, wherein said current value is adjusted in accordance with the temperature of a hydraulic mechanism (13) which accommodates said linear solenoid (9).

5. A hydraulic control apparatus for an automobile, comprising:
a spool valve (131) for controlling a hydraulic pressure force;
a linear solenoid (9) for driving said spool valve (131);
a solenoid driving circuit (12) for PWM controlling a current flowing into said linear solenoid (9) to control said spool valve (131);
a PWM driving circuit for supplying said solenoid driving circuit (12) with a pulse width modulated control signal;
control means for supplying said PWM driving circuit with a control signal to control said linear solenoid (9); and
current detection means for detecting a current through a power device (121) forming part of said solenoid driving circuit (12), said current intermittently changing in response to said pulse width modulated control signal,
wherein said control means varies said control signal supplied to said PWM driving circuit based on a current detected by said current detection means to control said linear solenoid (9).

6. A hydraulic control apparatus for an automobile according to claim 5, wherein said current detection means includes:
a resistor connected in series with said solenoid driving circuit (12) for detecting a current, and
A/D converting means for converting a voltage across said resistor for detecting a current to a digital signal based on said control signal.

7. A hydraulic control apparatus for an automobile according to claim 6, wherein
said current detection means further includes a sample hold circuit (141) for sampling and holding the voltage across said resistor for detecting a current based on said control signal, and
said A/D converting means converts the voltage sampled and held by said sample hold circuit to a digital signal based on said control signal.

8. A hydraulic control apparatus for an automobile according to claim 7, wherein
said sample hold circuit (141) samples and holds in synchronism with a falling edge of a pulse in said pulse width modulated control signal.

9. A hydraulic control apparatus for an automobile according to claim 6, wherein
said A/D converting means starts an A/D conversion in synchronism with a falling edge of a pulse in said pulse width modulated control signal.

10. A hydraulic control apparatus for an automobile according to claim 6, wherein
said A/D converting means starts an A/D conversion in synchronism with the timing at one half of an ON period of a pulse of said pulse width modulated control signal.

11. A hydraulic control apparatus for an automobile according to claim 6, wherein
said A/D converting means starts an A/D conversion in synchronism with the lapse of a predetermined time after a rising edge of a pulse in said pulse width modulated control signal.

12. A hydraulic control apparatus for an automobile according to claim 6, wherein
said A/D converting means starts an A/D conversion in synchronism with the timing of a predetermined angle with respect to a period of an ON pulse of said pulse width modulated control signal.

13. A hydraulic control apparatus for an automobile, comprising:
a spool valve (131);
a linear solenoid (9) for driving said spool valve (131);
a solenoid driving circuit (12) for chopper controlling a current flowing into said solenoid (9) to control a solenoid current;
a hydraulic control circuit (10) for supplying said solenoid driving circuit with a pulse width modulated control signal;
control means for supplying said hydraulic control circuit (10) with a control signal to control said linear solenoid (9); and
current detection means for detecting a current flowing through a power device (121) forming part of said solenoid driving circuit (12);
wherein said control means controls said linear solenoid (9) based on said hydraulic pressure instruction inputted thereto; and
varies said control signal supplied to said hydraulic control circuit (10) based on a current detected by said current detection means to control said linear solenoid (9).

14. A hydraulic control apparatus for an automobile according to claim 10, wherein said current detection means includes:
a resistor connected in series with said solenoid driving circuit (12) for detecting a current; and
A/D converting means for converting a voltage across said resistor for detecting a current to a digital signal based on said control signal.

15. A hydraulic control apparatus for an automobile according to claim 14, wherein
said current detection means further includes a sample hold circuit (141) for sampling and holding the voltage across said resistor for detecting a current based on said control signal, and
said A/D converting means converts the voltage sampled and held by said sample hold circuit (141) to a digital signal based on said control signal.

16. A hydraulic control apparatus for an automobile according to claim 15, wherein
said sample hold circuit (141) samples and holds in synchronism with a falling edge of a pulse in said pulse width modulated control signal.

17. A hydraulic control apparatus for an automobile according to claim 15, wherein
said A/D converting means starts an A/D conversion in synchronism with a falling edge of a pulse in said pulse width modulated control signal.

18. A hydraulic control apparatus for an automobile according to claim 15, wherein
said A/D converting means starts an A/D conversion in synchronism with the timing at one half of an ON period of a pulse of said pulse width modulated control signal.

19. A hydraulic control apparatus for an automobile according to claim 15, wherein
said A/D converting means starts an A/D conversion in synchronism with the lapse of a predetermined time after a rising edge of a pulse in said pulse width modulated control signal.

20. A hydraulic control apparatus for an automobile according to claim 15, wherein
said A/D converting means starts an A/D conversion in synchronism with the timing of a predetermined angle with respect to a period of an ON pulse of said pulse width modulated control signal.
